# EUROPEAN PATENT SPECIFICATION

(11) **EP 0 497 022 B1**
(45) Date of publication and mention of the grant of the patent: **07.04.1999**
(21) Application number: 91300772.0
(22) Date of filing: 31.01.1991
(51) Int. Cl.: G06F 17/30, G06F 9/44, H04M 3/56, H04N 7/14

(54) **Conference system**
Konferenzsystem
Système de conférence

(43) Date of publication of application: 05.08.1992
(73) Proprietor: Hewlett-Packard Company, Palo Alto, California 94304 (US)
(72) Inventor: Wink, Martin, Wokingham, Berkshire, RG11 3LL (GB); Jennings, Richard, Wokingham, Berkshire, RG11 3LL (GB); Baker, Colin, Stoke Gifford, Bristol, BS12 6QZ (GB)
(74) Representative: Smith, Denise Mary

(56) References cited:
- EP-A- 0 408 812
- COMPUTER. vol. 18, no. 10, October 1985, SILVER SPRING, MARYLAND, US pages 33 - 45; SUNIL SARIN ET AL.: 'Computer-Based Real-Time Conferencing Systems '

## Description

The present invention relates to a distributed computer system and relates particularly, but not exclusively, to a multimedia distributed object-based conference system.

The object-based approach to system development is becoming well-established. The basic idea is to program the system in terms of software objects, each having its own data and methods for operating on the data. Objects intercommunicate by means of messages. An advantage in encapsulating data and methods in this way is that the resulting system is relatively easy to maintain and develop. An example is NewWave Mail (produced and sold by Hewlett-Packard) which is an object-based electronic mail applications program in which messages and message components, such as text, distribution lists, etc, are treated as objects.

An object can be regarded as a discrete entity which can individually be moved, copied, destroyed, etc. An object is initially some data stored on disc or other medium. If object management software wishes to pass a message to it, one or more processes will be initiated which read the data as part of initialization. If an object is fully defined by its data and has no processes associated with it, it is said to be "inactive". If an object has one or more processes associated with it and is defined by the state of that process or processes and data then it is said to be "active".

A distributed object based system is one in which several workstations are interconnected over a network and messages between objects of the system can be sent over the network. Objects themselves may also be transmissible over the network. A network may comprise several interconnected intelligent workstations or a central computer connected to several terminals (workstations) or several interconnected server machines with intelligent workstations connected to each server, or a mixture of these possibilities. The term "workstation" is intended to be applicable to all of these possibilities.

In a distributed object based system there are benefits in splitting sharable semantic and presentation parts so as to enable more than one user to access the semantic part of a shared object. For example, in the context of a distributed conferencing system a whiteboard object would have a semantic part defining the state of the object and a presentation part for defining the appearance of the object to be displayed to a user and for enabling the user to make input. Several users may have access to a presentation part for viewing the whiteboard object so that they can each make contributions in a manner similar to a group of people clustered around a real whiteboard.

The workstations may be arranged in a client-server arrangement with semantic object parts stored on server machines and presentation object parts stored on client machines. Altematively, semantic object parts may be distributed around user machines on a network of intelligent workstations.

An example of such a system is discussed in EP-A-408812. A mechanism is provided for establishing a presentation object at one workstation to allow a user to interact with a semantic object at another workstation. With this mechanism, communication is established between the two workstations through datacom objects. This is followed by creation of a presentation object at the user workstation to access the semantic object elsewhere in the system.

According to the present invention we provide an object based distributed computer system comprising a network of workstations and means for transmitting objects between workstations, wherein said computer system supports objects of a first object type (V-s) adapted for storing data and objects of a second object type (V-c) adapted for presenting data stored in a corresponding object of the first object type (V-s) referenced by said object of the second object type (V-c), to a user, whereby a plurality of users of workstations each in possession of an object of the second object type referencing a given object of the first object type (V-s) are able thereby to access data of the given object of the first object type (V-s), wherein the computer system further comprises means for transmitting an object of the second object type (V-c) between workstations, whereby a result of transmitting an object of the second object type (V-c) to a given workstation is to create at the given workstation a reference to the object of the first object type (V-s) associated with said transmitted object of the second object type (V-c) at the given workstation.

The present invention provides an effective way of enabling further users to have access to a semantic object part, either for the purpose of autonomous working or for the purpose of participating in a joint activity.

In the embodiment to be described, the system comprises means for copying an object of the second type between workstations. In that embodiment transmitted objects of the second type include an identifier for the associated object of the first type.

The system according to the present invention may be in the form of a conferencing system comprising means enabling users of the workstations to participate in a meeting over the network wherein objects of the first type store meeting data and objects of the second type are for presenting meeting data. The invention also provides a method of convening a meeting using such a system comprising storing meeting data in objects of the first type (V-s), presenting meeting data by means of objects of the second type (V-c), and transmitting an object of the second type between workstations thereby to create a reference to the associated object of the first type for each workstation receiving an object of the second type.

Conferencing is an important application, which is difficult to achieve effectively over a network. An existing conferencing system is discussing in "Computer-Based Real-Time Conferencing Systems" by Sunil Sarin et al, Computers Vol 18, No 10, October 1985, pp 33-45.

It is believed that poor communications are a major cause of the poor performance of distributed teams of people working on a given project. The present invention advantageously provides an improved conference system for facilitating distributed meetings.

A particular embodiment of the present invention will be described, by way of example, with reference to the accompanying drawings in which:
Figure 1 is a diagram of a distributed system according to the present invention;
Figure 2 shows the major components of a server and workstation of the system;
Figure 3 shows a voice and data network structure;
Figure 4 shows video facilities for a client workstation;
Figure 5 shows a video network structure;
Figure 6 illustrates the main objects in the system;
Figure 7 illustrates the functionally split nature of the objects in the system;
Figure 8 shows the major components of the system infrastructure;
Figure 9 shows a typical Venue;
Figure 10 shows a CoMedian directory;
Figures 11 - 14 illustrate message sequences for system operations;
Figures 15 - 27 show screens during a typical user session.

The main components of a multi-media distributed object-based conferencing system according to the invention will first be described.

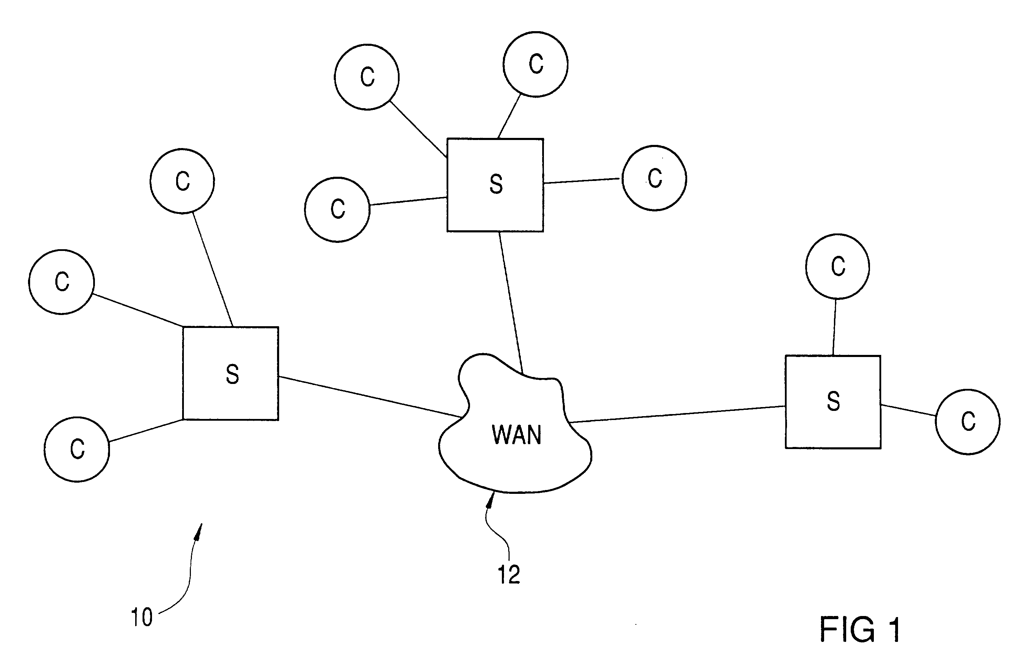

Referring to Figure 1, a multimedia distributed object-based conference system according to the present invention is indicated at 10. The system 10 comprises servers S connected over a network 12. The network 12 may be a wide area network (WAN) or a local area network (LAN) or a metropolitan area network (MAN). Client workstations C are connected to each of the servers S. Each site requires a server S.

Servers S communicate with each other by opening virtual circuits between pairs of servers. Although in principle, client workstations C could communicate directly with each other, this creates practical problems and therefore each client workstation C has only one virtual channel open to its local server S to enable client workstations to communicate with each other via servers S.

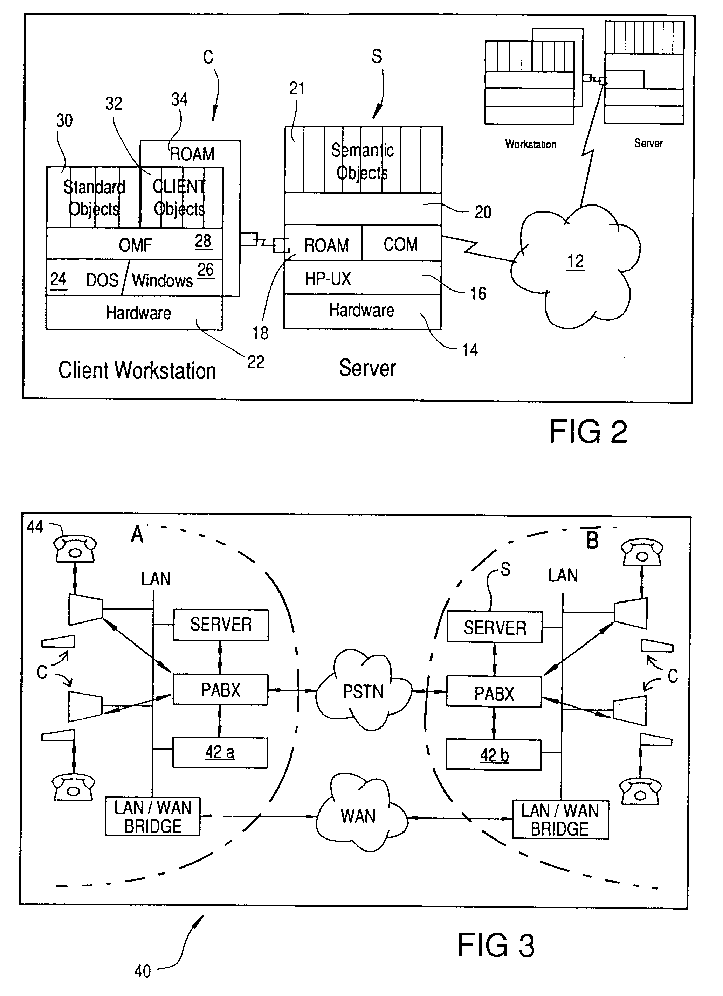

Referring to Figure 2, each server S comprises:
hardware 14, such as an HP9000/300 HP-UX computer (HP is a trade mark of Hewlett Packard Company);
operating system software 16, such as HP-UX software;
Remote Object Access Manager (ROAM) software 18 for managing communications with client workstations C connected to the server S and other servers on the network;
COM software 20 providing object management facilities;
server objects 21 which are objects to be shared between users and which correspond to the semantic object parts mentioned in the introduction.

Each client workstation C comprises:
hardware 22, such as an IBM-AT compatible PC;
operating system software 24, such as DOS software;
windowing software 26, such as MS Windows applications software;
an object management facility (OMF) 28, such as a Standard NewWave OMF. (NewWave is a trade mark of Hewlett-Packard Company used for a family of applications software);
objects software 30, such as NewWave objects and specialized client objects 32 and a ROAM object 34 for handling communication with objects on other computers. The client objects 32 correspond to the presentation object parts mentioned in the introduction.

The user of a client workstation C therefore has a windowed user interface within which to manipulate objects of the system and can cause objects to be transmitted over the network 12 via the associated server S.

The system 10 provides multimedia facilities to users. For example, each client workstation C may have voice and/or video communication facilities as well as data communication facilities.

A possible voice and data network structure 40 is shown in Figure 3. In each of two sites designated A and B, a networked PC server 42 is connected to the local PABX. The PC server 42 contains one or more multi-port telephone interface cards (such as the VBX-300 card made by Natural Microsystems Inc.). The PABX is controlled by the PC server 42 and users can use their existing standard desk telephones 44 which are connected to the local PABX and conveniently located near their client workstations C.

Each of the sites A and B comprises a LAN and a LAN/WAN bridge interconnecting the LAN with a WAN.

In use, the PC server 42 receives commands from servers S to set up, maintain and close down telephone conference calls. To the PABX, the PC server 42 appears as a normal telephone user and can therefore dial other users adding them in to conference calls using DTMF.

In order to conduct conferences over a wider area, PC servers 42a and 42b on respective sites A and B connect to each other over the public switched telephone network (PSTN) and add in their own local users to the conference.

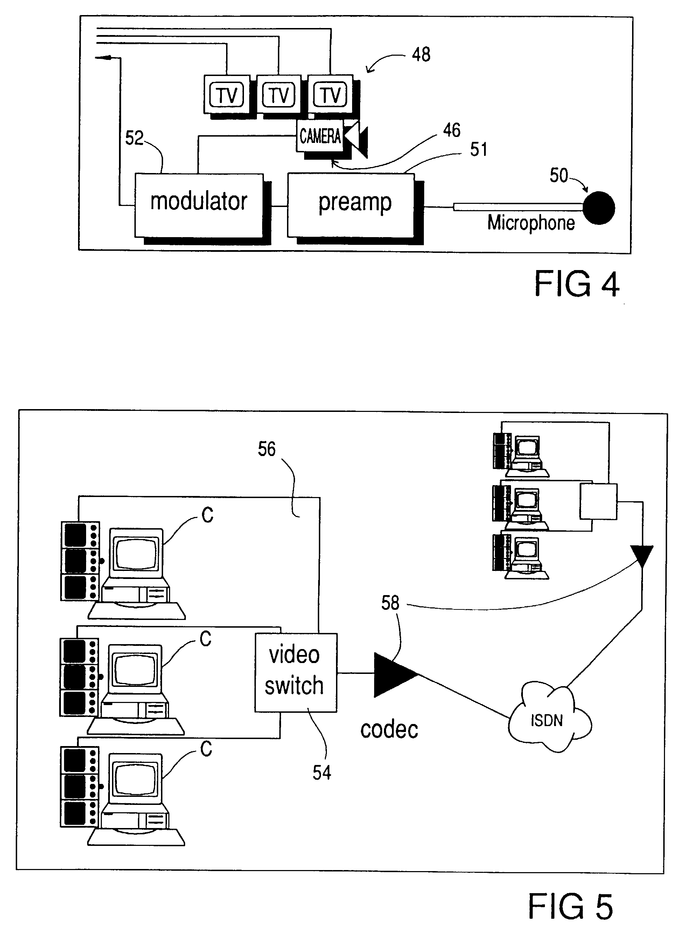

Referring to Figure 4, each client workstation C with video facilities has a video camera 46, two or more VHF TV receivers 48, a microphone 50, a preamplifier 51 and a VHF modulator 52.

Furthermore, the client workstations C may be fitted with video cards to enable a user to view video in windows.

A possible video network is shown in Figure 5. The video network is based on a central video switch 54 connected using a star topology to client workstations C. Video signals are modulated on to VHF carriers and transmitted over standard analogue cabling 56. The video switch 54 is a conventional cable television switch. Several such switches can be cascaded in a bar arrangement for large systems.

For long distance video communications, a device 58 for compressing and decompressing video signals (a "codec") may be used and the signals are transmitted using ISDN telephone lines.

The architecture of the object-based system 10 will now be described.

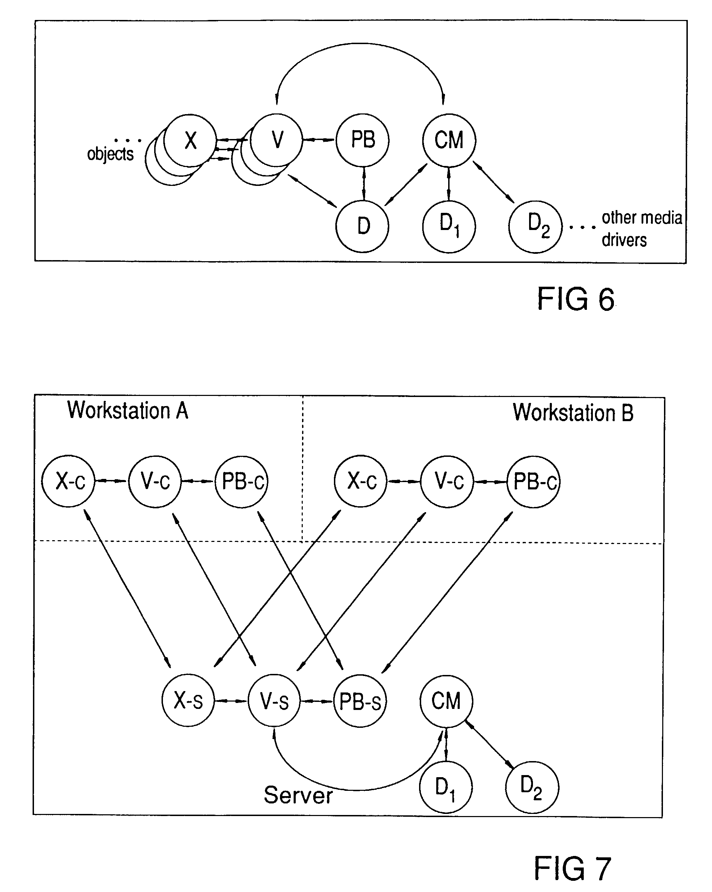

With reference to Figure 6, the structure of one user's portion of the system is represented. The functions of the objects are as follows:
a Venue object (V) is an electronic meeting place allowing control over media channels and providing a location for storing shared objects. A user may have several Venue objects;
a Phone Booth object (PB) controls the creation of Venue objects and oversees the setting up, maintenance and closing down of conferences. The PB comprises a processor for handling incoming and outgoing calls;
a Connection Manager object (CM) controls driver components (D₁ ... Dₙ) which handle media connections for the system 10;
a Directory object (D) which provides a list of potential meeting participants.

Object X represents another system object for performing a specific meeting-related function, eg, a whiteboard function.

Figure 6 is a conceptual representation of the system 10 and the arrows represent inter-object communication. In the embodiment being described, the system comprises client workstations C and servers S and most of the objects referred to in Figure 6 are functionally-split into a server component and one or more client components as indicated in Figure 7.

The server objects handle the centralized and distribution - oriented aspects whereas the client objects handle the presentation aspects. Hence shared applications can be written with one server object connected to a plurality of client objects on different client workstations.

In Figure 7, PB-s means a Phone Booth server object and PB-c means a Phone Booth client object, and so on.

In this embodiment, the client objects are implemented as NewWave objects ie. several new classes of NewWave objects have been added: Venue objects, ROAM objects, Whiteboard objects, Phone Booth objects. Thus the semantic part of these functionally split objects runs on an HP-UX server and the user interface runs on MS-DOS NewWave client workstations.

The client workstations are each running an object-based system. Objects are linked together by parent-child links and can be copied. During a copy operation, the container of the object to be copied sends a message to the OMF28 asking the OMF28 to copy the relevant object and identifying the container object which is to receive the copy object.

The OMF28 performs the copy function and then sends a message to the target container object instructing it to insert the copy object as one of its child objects.

Mailing an object involves serialising the object, transmitting it to its destination and deserialising it. Serialising an object involves converting it to files, say DOS files, containing the data of the object and information about its properties and its child objects.

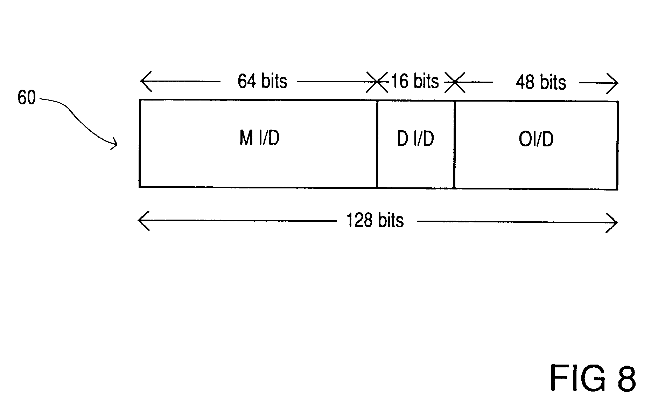

Server objects are not linked by parent-child links in the manner in which client objects are so linked. All client objects contain a reference to their associated server object. Figure 8 shows the form of data item 60 used to name objects. The data item 60 is an eight-byte array following the convention used for Internet Protocol (IP) addresses. The first 64 bits is a machine identifier M I/D comprising a 32 bit server IP address and a 32 bit machine IP address. For a server object the server IP address and the machine IP address will be the same whereas for a client object these will be different. If there is only one domain per machine, the domain identifier D I/D is zero. The object identifier O I/D comprises a 32 bit generation count and a 16 bit tag. The 16 bit tag uniquely identifies the object within the relevant storage domain. Since tags are reusable when an object is deleted a generation count is used to ensure that each object is uniquely-named in time. The generation count is simply the time in seconds.

When a client object is closed (inactive) it appears as an icon on a user's screen. The user opens the object by clicking on the icon. Opening a client object causes it to send a message to its associated server object informing the server object that the client object is now active i.e. a Here Am I message. Until then, the server object is unaware of the existence of the client object. In other words, links between client and server objects are non-persistent and 'weak' i.e. the existence of a server object does not guarantee the existence of a corresponding client object and vice-versa. Server objects only store the identities of corresponding client objects which are currently active. Opening a client object means that a user can view the state of the object and can make input to it. The client object regularly updates, and is updated by, the server object.

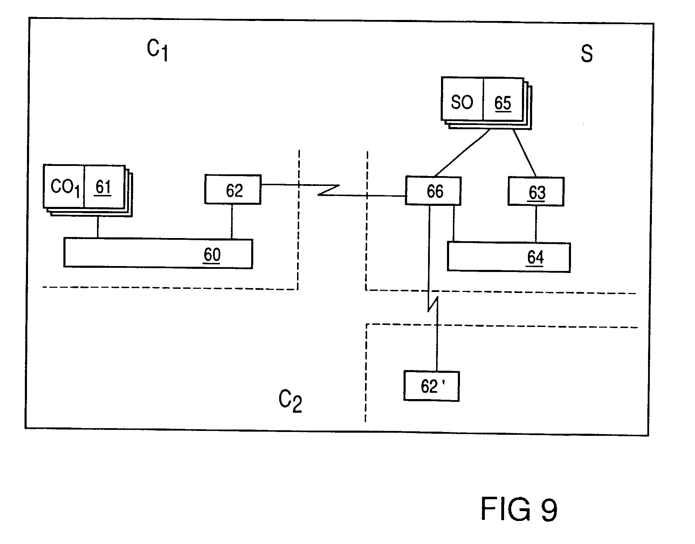

Figure 9 depicts the components involved in a typical active server object which is associated with client objects on two different client workstations C₁ and C₂. Each object is given a unique object identifier comprising components identifying the relevant client/server machine, the relevant storage domain and a number for the particular object. On the client side, the system has an object management facility (OMF) 60 for keeping a record of what objects are presently on the particular client workstation and which is involved in object creation and deletion, object naming, object activation and deactivation and inter-object message routing. This is a standard NewWave OMF. There is a client object manager library (COMLIB-C) 61 statically linked to each client object CO providing access to the functionality of a ROAM client object 62. In other words, the COMLIB-C 61 has been added to standard NewWave objects to form the client objects for functionally split objects. Communication through the COMLIB-C 61 is network transparent, ie, objects only need to know the object identifiers of other objects, not their locations.

On the server side there is a primitive object management facility (COM-S) 63 providing file management and object naming and message sending facilities in conjunction with the operating system software 64. A server object manager library (COMLIB-S) 65 is statically linked to each server object SO enabling access to the functionality of the object management facility 63 and a ROAM server object 66.

When client object CO₁ wishes to send a message to the corresponding server object SO, the ROAM client object 62 passes the message to the ROAM server object 66 which passes the message on to the server object SO. Messages from the server object SO to client objects are sent in the reverse manner. If a message is to be sent between objects on the same server the COMLIB-S 65 sends it directly without involving the ROAM server object 66. Messages are also sent between servers via the ROAM server object 66 and, in this way, communication between client workstations connected to different server machines is possible.

The functionality of certain objects in the system will now be described. The term "click" will be used in this specification to denote a selection made by the user of a workstation using an input device, such as a mouse. The term "drag" will denote moving the input device whilst such a selection is made so as to "drag" an item across the screen.

The Venue provides an electronic meeting room, inside of which person-to-person calls, group meetings and presentations to large groups can be held.

Venues provide a binding between the people involved in a meeting, the data which they are sharing, and the media channels connecting them. They are scalable from just two people up to many people, the exact number is subject to technical constraints. This allows a meeting to start off as a simple phone call between two people, build up as experts are brought in, to become a full group discussion without having to decide to move to a different object because the nature of the meeting has changed.

The Venue is a shared object and therefore exists on a server machine. The client workstations have Venue client objects which provide an interface to the Venue server objects running on the corresponding server. There may be many Venue client objects on different client workstations for a particular Venue server object.

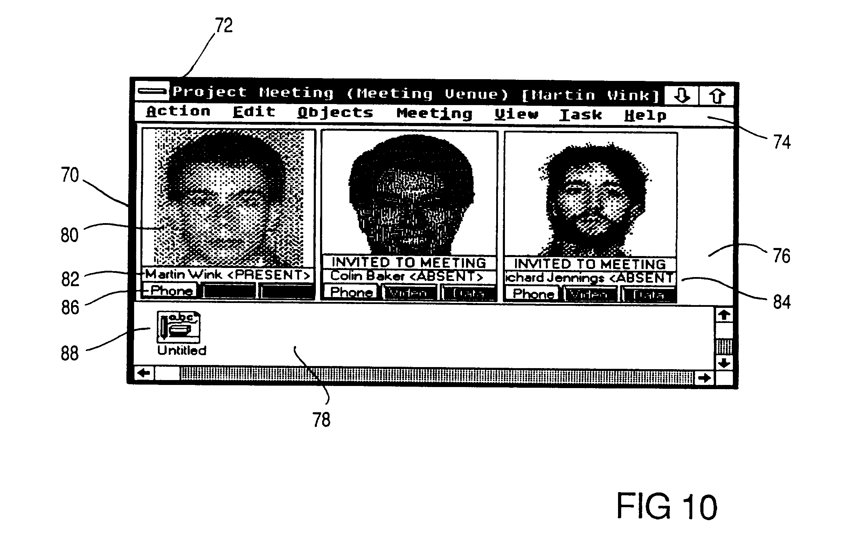

Figure 10 shows the appearance of a Venue to a user. The Venue is being viewed in a window 70 having a title bar 72 and a menu bar 74. At the top is a participants' area 76 where the people in the Venue can be seen and where their media channels can be controlled. Beneath that is a shared area 78 where objects for use in the meeting are stored.

The participants in a Venue are displayed side by side, with each participant being represented by a still bitmap 80, a name 82 accompanied by an indication of whether that user is present in the meeting or absent and status banner 84 indicating that an absent user has been invited to the meeting, and a row of media control buttons 86. The bitmap 80 may be replaced by a motion video window when video in windows is available and the video channel is in use.

Beneath the participants' area are three media buttons 86 for telephone, video and data and each one can be in one of four states. The states are:

| **Button Appearance** | **Meaning** |
|---|---|
| No button | This person does not have this media channel available. |
| White, unhighlighted | The media channel is available, but not chosen for use. |
| Black | The media channel has been selected, but is inactive because the person is not present in the Venue or the connection has not been completed yet. |
| Red | The media channel is being used. |

The lower portion of the Venue is taken up by the shared object area 78. This acts as a shared folder, storing objects on the server and making them accessible to all users of the Venue. Inactive objects are represented by an icon such as icon 88 in Figure 10. Objects in the shared object area 78 may be client objects e.g. Whiteboard client objects, or may be standard NewWave objects. It is possible to move objects into and out of the shared object area 78 of the Venue-client object. Moving a functionally-split object such as a Whiteboard object into the shared object area 78 does not entail moving the Whiteboard-server object but just the Whiteboard-client object. The OMF28 instructs the Venue client object to insert the Whiteboard-client object as one of its children. The Whiteboard-client object is then serialised by the Venue-client object and sent to the Venue-server object. The Venue-server object updates its other active Venue-client object with the news that a new Whiteboard object is available in the Venue and these Venue-client objects display the Whiteboard-client object icon in their shared object areas 78 accordingly. The Whiteboard-server object remains on whatever server it was initially stored. Subsequent opening of the Whiteboard object by any of the users of the Venue cause a copy of the Whiteboard-client object to be serialised by the Venue-server and sent to the relevant client-workstation where it is deserialised providing access to the contents of the Whiteboard object for that user. When that user subsequently closes (deactivates) the Whiteboard object, the copy of the Whiteboard-client object remains on that machine for subsequent use.

In contrast, if a NewWave object icon is moved into the shared object area 78 of a Venue-client object, this causes the NewWave object to be serialised and sent from the client workstation to the server machine which stores the relevant Venue-server object. The Venue-server object then instructs its other active Venue-client objects to display the relevant NewWave object icon. Subsequent opening of the NewWave object by a user of such an active Venue-client object causes a copy of the NewWave object to be made and sent to the relevant client workstation. Each such user thus obtains a separate copy of the NewWave object and changes which a user makes are not reflected in the copies held on the other users' machines. This is a consequence of the non-functionally split nature of NewWave objects and is an implementational feature rather than one which is important to the present invention.

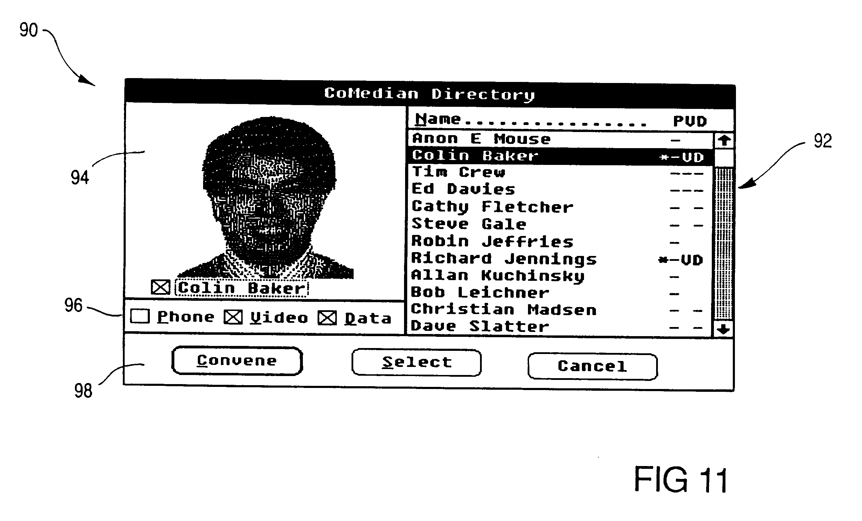

There is one Phone Booth server object on every server machine and one Phone Booth client object on every client workstation. The Phone Booth client object arranges for the creation and activation of Venue client objects on client workstations and the Phone Booth server object manages the creation of Venue server objects and the convening of Venues. On opening a Phone Booth client object the user is presented with a directory 90 of possible meeting participants as shown in Figure 11. The directory 90 comprises a list 92 of potential participants, an area 94 for displaying a picture of a participant, a media selection area 96 and an options area 98 displaying three options: Convene, Select and Cancel. Unavailable media options are greyed out in the area 96.

When a name is selected by choosing the Select option and then selecting a name from the directory 90, a picture of that participant appears in the area 94 as shown. The media connections are selectable by checking the relevant boxes in the media selection area 96. Checking the box beside the name of the person in the area 94 adds that person to the list of Venue participants. In addition, the initials of the media options chosen (Phone, Video, Data) appear against the participant's name in the list 92. A previously selected participant can be de-selected by de-checking the box beside the name of that person in the area 94. Taking the Cancel option means that none of the changes made since the window for the directory 90 was brought up will be implemented. The **Convene** option will be described later.

There is also a Connection Manager object on each server machine providing the facility to interconnect users using different media. The Connection Manager object handles the generic operations involved in establishing non-data interconnections. Drivers for each medium available, eg, video, telephone, handle the specific operations involved in carrying out switching requests during use. The Connection Manager object performs the following services:
maintains a list of media resources available in the system:
   - detects when resources fail
   - monitors resource/channel availability (ie, monitors, microphones, speakers, cameras);
sets up connections between people using different media:
   - point-to-point
   - multi-point: all that are available
maintains list of established connections and ensures synchronization with other networks, ie, maintains a model of the state of other networks;
optimizes switching to prevent unnecessary disconnect -connect transactions;
provides an interface for monitoring and auditing;
provides interface to media drivers.

Another functionally split object which is provided in this system is the Whiteboard. A Whiteboard object provides users with a shared computer whiteboard facility so that a user can draw, write and type on his/her Whiteboard or acquire an image from another source and the input will be visible to other users viewing the same Whiteboard on different client workstations. Thus the Whiteboard object is an information sharing medium which allows users to look at a picture of what they are discussing.

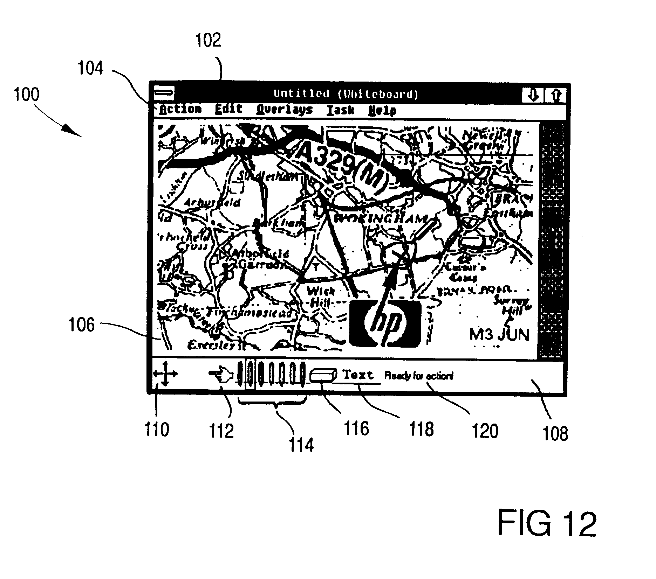

Figure 12 shows an example of the appearance of a Whiteboard client object. The Whiteboard is being viewed in a window 100 having a title bar 102 and a menu bar 104. A drawing area 106 of the window 100 is devoted to displaying the contents of the Whiteboard, in this case a map showing the location of a Hewlett-Packard office. At the bottom of the window 100 is an area 108 indicating the range of tools which are available to the user of the Whiteboard. These tools comprise:

| | |
|---|---|
| a scroller | 110 |
| a pointer | 112 |
| a selection of different coloured pens | 114 |
| an eraser | 116 |
| a text selector | 118 |

Apart from the pointer 112, the tools are personal to a user ie each of the users viewing the same Whiteboard could be using the same tool eg. a red pen, without having to wait until another of the users had finished using that tool.

The scroller 110 can be used to scroll the entire window 100 around the Whiteboard. Selecting this tool turns the cursor into a compass enabling the view of the Whiteboard to be click-dragged around by the user.

Only one user can move the pointer 112 at a time. A user takes control of the pointer by clicking on the pointer logo - this turns the cursor into a pointer. At this time, the other users viewing the Whiteboard cannot see the pointer 112. To show the pointer 112, the user needs to click it down at a chosen point in the drawing area 106. The pointer 112 then becomes visible to all of the Whiteboard users at that chosen position. The cursor of the user who has just moved the pointer 112 reverts to the default arrow.

Likewise the seven coloured pens are selectable and deselectable by clicking on the appropriate pen logo, enabling different users to make input in different colours.

The eraser 116 is selectable to remove marks on the Whiteboard. Also, direct typing of text onto the Whiteboard can be done by selecting the text selector 118.

In the area 108 there is also room for a status message 120. As users open or close the Whiteboard other users are notified by a status message.

Modes of operation of a system according to the present invention will now be described, concentrating first on utilization of the Venue.

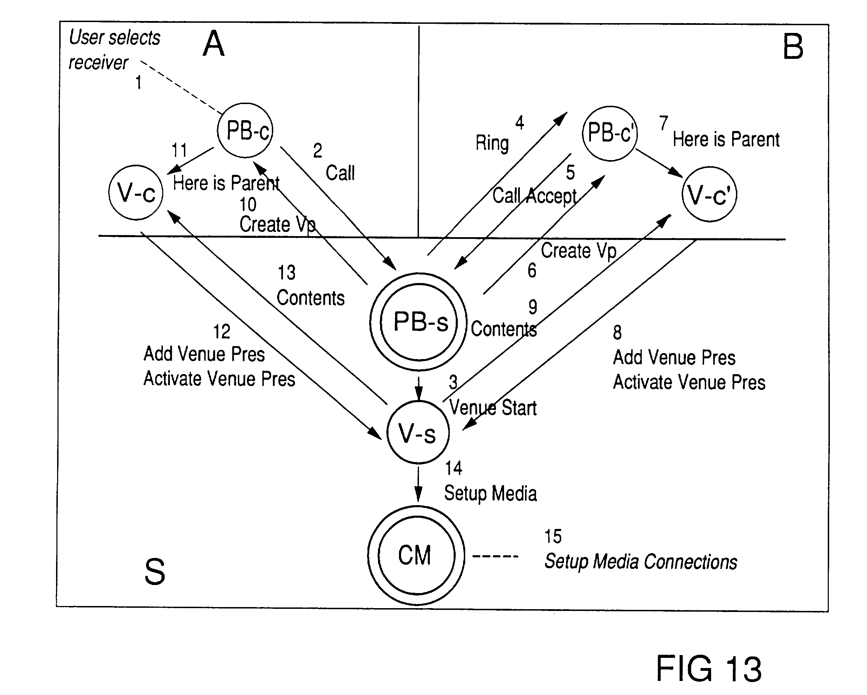

Once a user selects participants and media as described with reference to Figure 11 and selects the Convene option a process of events is initiated to create a new Venue object. Figure 13 shows the objects and the numbered sequence of messages. Figure 13 depicts a server machine S and two client workstations A and B connected to the server machine S. On each client workstation there is initially a Phone Booth client object PB-c. On the server machine S there is initially a Phone Booth server object PB-s and a Connection Manager object CM.

On selecting the **Convene** option using client workstation A, which causes an input (dotted line referenced 1) to the Phone Booth client object PB-c, a message (referenced 2) is sent from the Phone Booth client object PB-c to the Phone Booth server object PB-s on the server machine S causing the Phone Booth server object to create a new Venue server object V-s using a **Venue Start** message (referenced 3). The Phone Booth server object PB-s then sends a **Ring** message (referenced 4) to the Phone Booth client object PB-c on client workstation B causing a dialogue box to appear on the screen of client workstation B inviting the user to take part in the proposed meeting. That user accepts or declines the invitation causing a corresponding message (referenced 5) to be sent from the Phone Booth client object PB-c' on client workstation B to the Phone Booth server object PB-s. If the invitation is accepted a **Create Venue** message (referenced 6) is sent from the Phone Booth server object PB-s to the Phone Booth client object PC-c' which causes it to create a new Venue client object V-c' on client workstation B involving sending a **Here Is Parent** message (referenced 7) to the new Venue - client object V-c' to notify it of the identity of the Venue server object V-s. The new Venue client object V-c¹ then sends a message (referenced 8) to the Venue server object V-s requesting information about the contents of the Venue. The reply from the Venue server object V-s is referenced 9 in Figure 13.

Messages corresponding to those referenced 6-9 are sent between the server S and client workstation A so as also to create a new Venue-client object V-c on that workstation and these messages are referenced 10-13 in Figure 13.

Finally, the Venue server object V-s sends a request (referenced 14) to the Connection Manager object CM to set up the chosen media connections and the Connection Manager object instructs the relevant media drivers accordingly (dotted line referenced 15).

The users of client workstations A and B can then communicate using the newly created Venue.

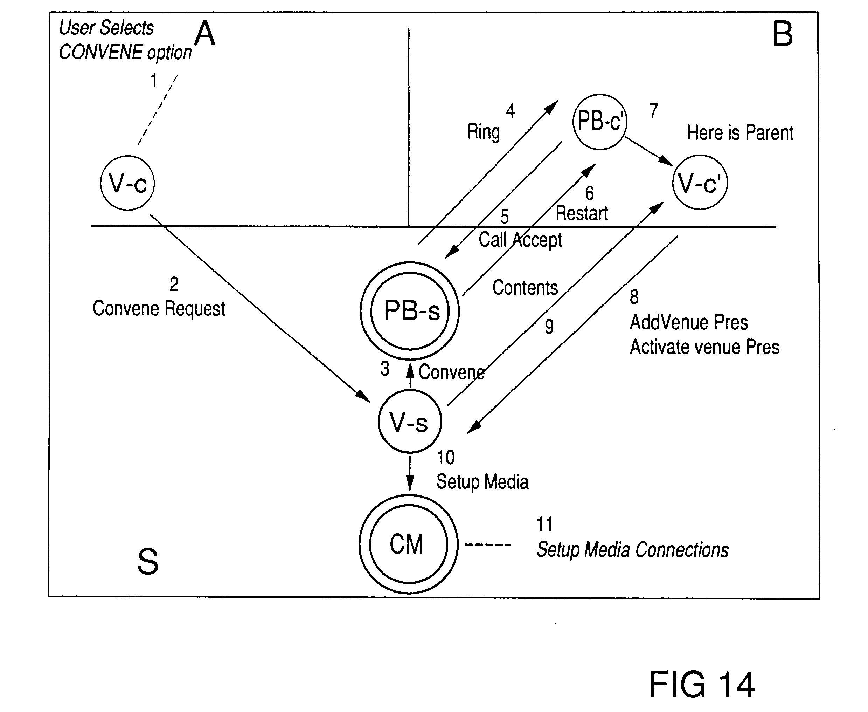

It is also possible to convene an existing Venue by selecting the **Convene** option within the Venue. This initiates a sequence of events which will be described with reference to Figure 14. Again, a server machine S and two client workstations A and B are represented.

The user selection of the **Convene** option is referenced 1 in Figure 14. This causes the Venue client object V-c to send a **Convene Request** message (referenced 2) to the Venue server object V-s which notifies the Phone Booth server object PB-s of the convene request in a message referenced 3 which identifies the intended meeting participants. The Phone Booth server object PB-s sends a **Ring** message (referenced 4) to the Phone Booth client objects PB-c on the workstations of the intended meeting participants causing a dialogue box to be displayed on these workstations inviting the users to partake in a meeting. When these users accept or decline the invitation this causes a reply message (referenced 5) to be sent from each Phone booth client object PB-c' to the Phone Booth server object PB-s.

The next step is for the Phone Booth server object PB-s to instruct (message referenced 6) the Phone Booth client objects PB-c¹ to create new Venue client objects V-c¹ on machines where a Venue client object linked to the Venue server object V-s is not already stored. Such new Venue client objects V-c' then send a message (referenced 8) to the Venue server object V-s requesting information about the contents of the Venue so that the appropriate icons can be displayed in the shared area 78 of Figure 10 on the respective client workstations. The reply message containing information about the contents of the Venue from the Venue server object V-s is referenced 9 in Figure 13.

The Venue server object V-s then sends a request (referenced 10) to the Connection Manager object CM to set up the chosen media connections and the Connection Manager object instructs the relevant media drivers (not shown) accordingly (dotted line referenced 11). The distributed meeting can then proceed.

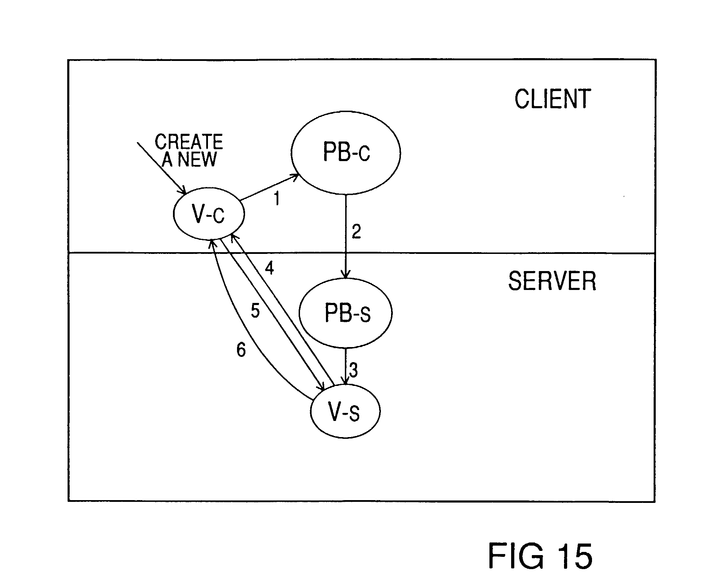

A user can also set up a new Venue by selecting a **Create a New** menu option in NewWave Office (Figures 14-17 of Appendix A). On opening the new Venue-client object a Venue-server object also needs to be created. Figure 15 depicts the process. A server machine is indicated by S and a client workstation by C.

The act of opening the new Venue-client object V-c causes it to send a message (referenced 1) to the Phone Booth client object PB-c which triggers a message (referenced 2) to be sent from the Phone Booth client object PB-c to the Phone Booth server object PB-s requesting creation of a new Venue server object V-s. The Phone Booth server object PB-s creates a new Venue server object V-s using a **Venue Start** message (referenced 3). Next the new Venue-server object V-s sends a **Here Is Parent** message (referenced 4) to the Venue-client object V-c containing the ID of the Venue-server object. The new Venue client object V-c then sends a message (referenced 5) to the Venue server object V-s requesting information about the contents of the Venue and there is a corresponding reply (referenced 6) from the Venue server object.

It is possible to add new meeting participants to an active Venue by selecting an **Add New Member** menu option. This causes a directory of potential participants to be displayed as shown in Figure 11 to enable the selection of one or more further participants and associated media connections. Information on these choices is conveyed from the Venue client object to the Venue server object which updates the control panels of the relevant Venue client objects. Chosen new meeting participants are not aware of any change until someone convenes a meeting.

When a user elects to close a Venue by selecting a **CLOSE** option this causes a message to be sent from the relevant Venue-client object to its Venue-server object informing the Venue-server object that the Venue-client object is deactivating. The Venue-server object then messages the Connection Manager object to disconnect the media connections for the Venue-client object which is deactivating. The Venue-server object sends messages to all of its other Venue-client objects informing them of the deactivation of the particular Venue-client object so that these other Venue-client objects alter their appearance to indicate that the relevant meeting member is now absent.

Another way of setting up a distributed meeting is for a user to copy an existing Venue-client object to the desired meeting participants. A Venue-client object is a reference to a Venue-server object. Copying a Venue-client object to other workstations creates a reference to the relevant Venue-server object on those other workstations because in the copying process the Venue-client object's reference to its Venue-server object is preserved.

There are different ways in which a Venue-client object can be copied to other workstations. One way is to include the Venue-client object in an electronic mail message. For this option, an electronic mail message is created in the normal manner e.g. using Hewlett-Packard's NewWave Mail and a Venue-client object is included in the message using a standard copy operation. When the or each addressee receives the message, they place the Venue-client in their collection of objects in preparation for the forthcoming meeting. At the relevant time, the meeting participants open their Venue-client objects to commence the meeting. On opening the Venue-client objects, their 32 bit machine IP address is automatically updated and the Venue-client objects send a Here Am I message to the associated Venue-server object.

Another option is for the user wishing to set up a distributed meeting to copy the relevant Venue-client object and to serialise the copy of the Venue-client object to a file on floppy disc (or other shared medium such as a network drive). This file may then be transported to the workstations of the intended meeting participants and deserialised thereby providing each of these participants with a copy of the Venue-client object and thereby means for accessing the associated Venue-server objects in order to take part in the distributed meeting.

A new Whiteboard-client object can also be created using the "Create A New" option in NewWave Office. On opening the Whiteboard-client object a new Whiteboard server object needs to be created. The process is analogous to that described with reference to Figure 15 replacing references to Venue objects with references to Whiteboard objects.

A new Whiteboard object can also be created inside a Venue by selecting the "Create a New" option inside the Venue. In this case, the Venue-client object automatically activates the new Whiteboard-client object in order to initiate creation of a new Whiteboard server object (again using a process analogous to that shown in Figure 15).

In the same manner as a Venue-client object can be copied and transmitted in an electronic mail message or via floppy disc, a Whiteboard-client object can be so utilised. Again the advantage of creating a reference to the relevant Whiteboard server object for the recipients of the copied Whiteboard-client objects is obtained since each copy of the Whiteboard-client object contains a reference to the Whiteboard server object (as described with reference to Figure 8).

Also as previously described, a Whiteboard-client object can be moved into the shared items area of a Venue object by a user causing copies of the Whiteboard-client object to be made available to the other users of the Venue object thereby giving access to the associated Whiteboard server object to these users.

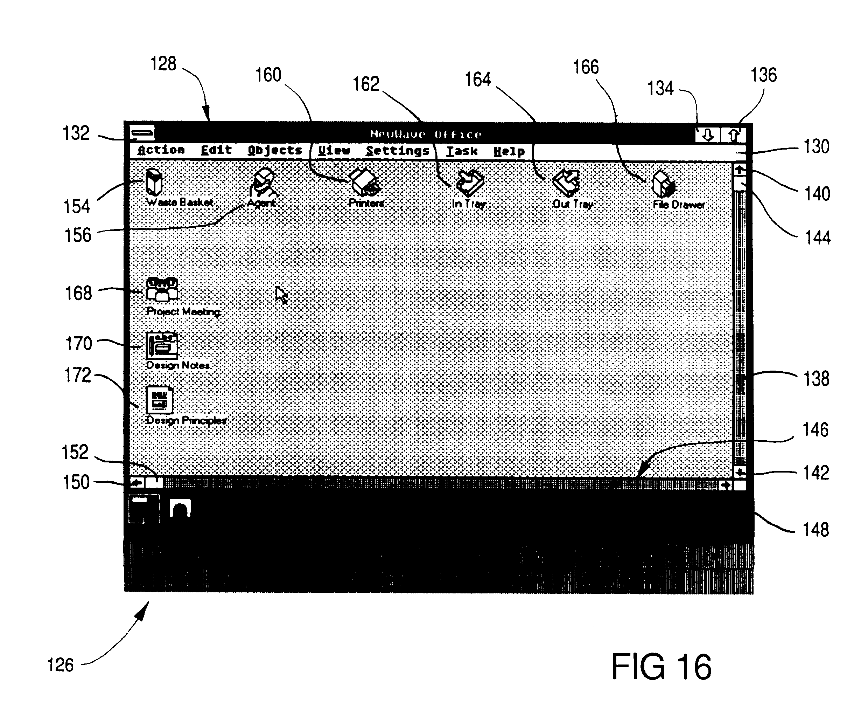

An exemplary user session will now be described with reference to Figures 16 to 33 involving hypothetical users Martin, Richi and Ed.

Figure 16 shows a screen of a client workstation (Martin's) running Hewlett Packard NewWave Software. A window 126 has:
a title bar 128 carrying the title "NewWave Office";
a menu bar 130 offering the following options:
   Action, Edit, Objects, View, Settings, Task and Help;
a system menu box 132;
size boxes 134 and 136;
a vertical scroll bar 138 with scroll arrows 140 and 142 and a scroll box 144;
a horizontal scroll bar 146 with scroll arrows 148 and 150 and a scroll box 152;

The window 126 displays icons for some standard tools at the top: Waste Basket 154, Agent 156, Printer 160, In Tray 162, Out Tray 164, File Drawer 166. The icons 168, 170 and 172 respectively on the left hand side represent work-related items:

| | |
|---|---|
| "Project Meeting" | a Venue-client object representing a reference to a Venue server object on the local server machine; |
| "Design Notes" | a Whiteboard-client object representing a reference to a Whiteboard server object on the local server machine; |
| "Design Principles" | a NewWave document object fully contained on the client workstation. |

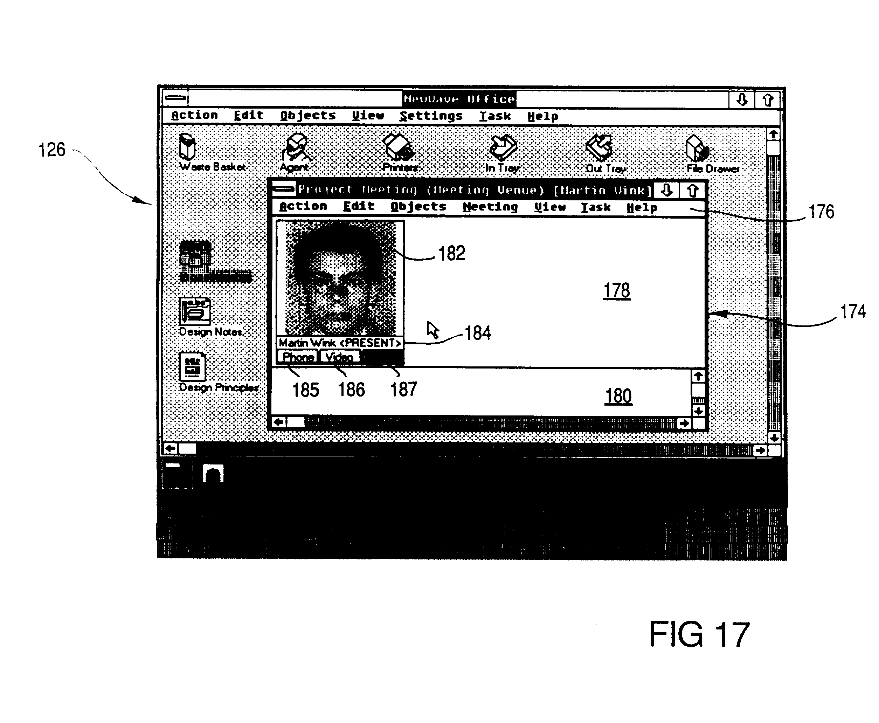

To "open" an object, the user double clicks on the relevant icon. Referring to Figure 17, Martin has opened the Project Meeting Venue which is shown in a window 174. The window 174 has a menu bar 176 which has similar options to the menu bar 130 of the window 126 except a Meeting option instead of the Setting option. The window 174 displays a participants area 178, showing only Martin, and a shared items area 180 which is empty. Underneath a bit map 182 of Martin is a name bar 184 which includes a notification of presence and three media control buttons 185-7 for Phone, Video and Data respectively. Only the Data button 187 is highlighted in this example, ie, blacked out in Figure 17.

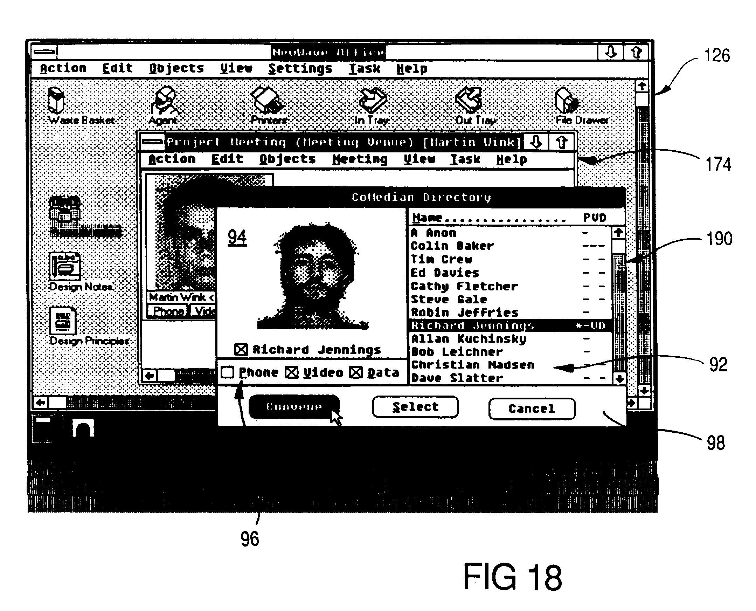

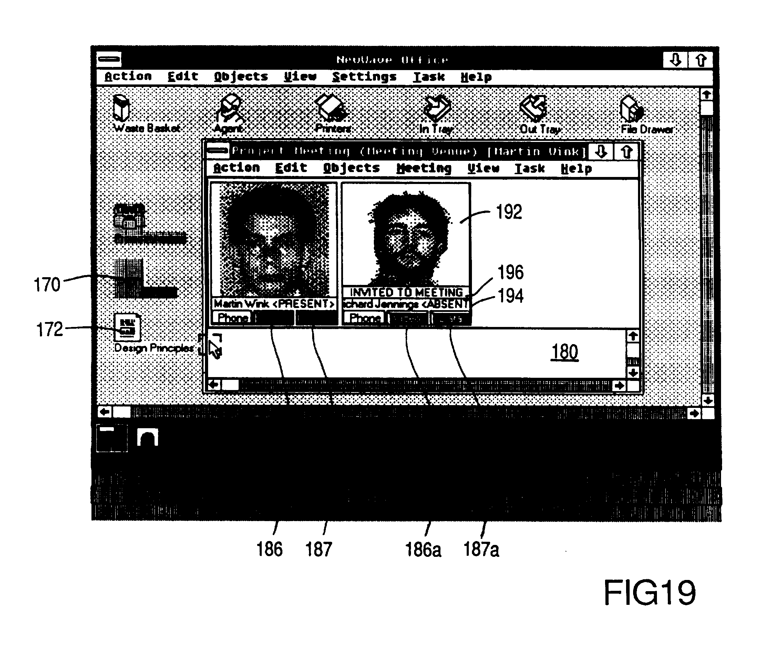

On selecting the Meeting option from the menu bar 176 of the window 174, a CoMedian directory window 190 appears, Figure 18. The reference numerals for the CoMedian directory which were used in Figure 11 will be retained here. Martin selects the name Richard Jennings from the list 92 of potential participants causing a picture of Richard to appear in the area 94 together with crosses in the video and data boxes in the area 96 to indicate Richard's media selections. This means that Richard will be contacted through the system for data sharing with both video and audio travelling over video connections. Martin then clicks on the Convene button in the options area 98 to add Richard to the Venue which causes Richard's image to join Martin's image in the Venue as shown at 192 in Figure 19. Richard is marked as absent at 194 and a banner 196 is displayed indicating that he has been invited. Martin has selected both video and data connections for himself in order to match what was selected for Richard. This causes the video and data buttons 186 and 187 to be highlighted in a first colour to show that they are currently in use albeit only locally to Martin's own workstation. Richard's video and data media buttons 186a and 187a are highlighted in a second colour to indicate that they have been requested but are not yet in use.

While waiting for Richard to join the Venue, Martin is moving the Design Notes and Design Principles objects 170 and 172 into the shared items area 180 of the Venue by clicking on each object and dragging it to the area 180.

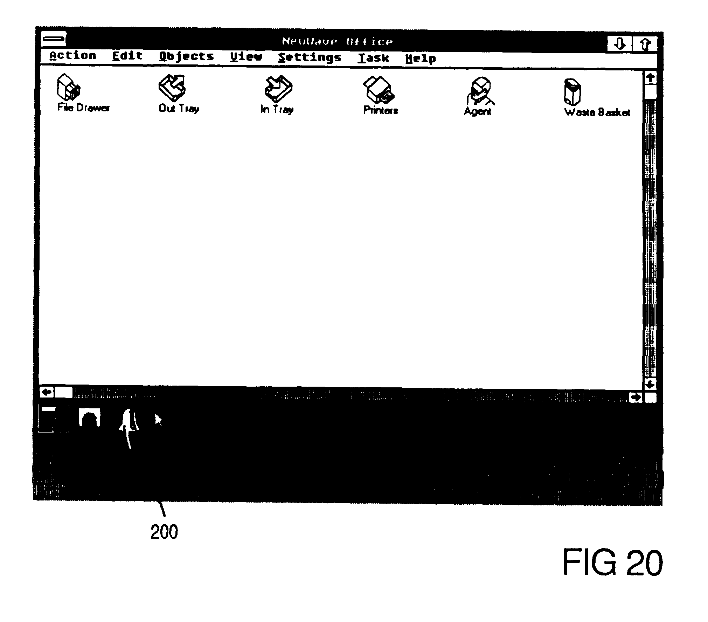

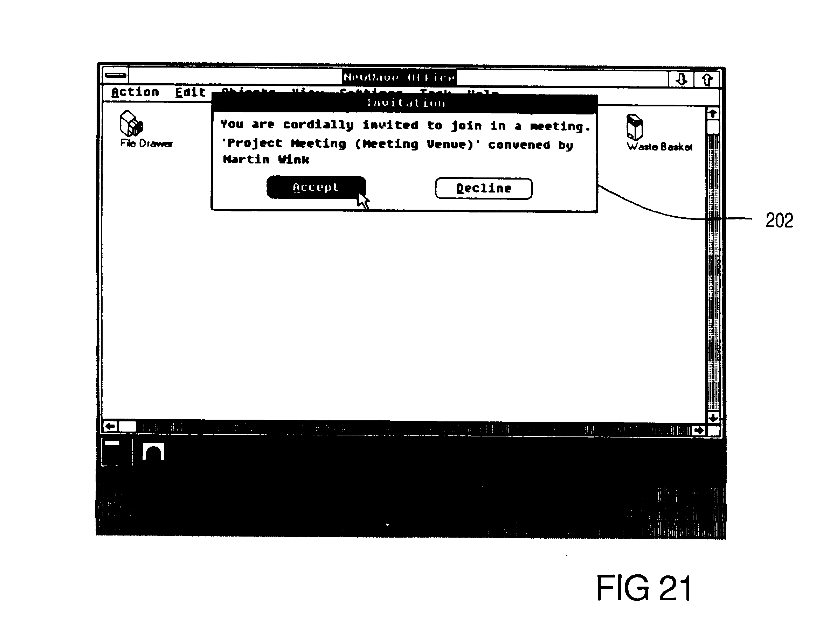

Moving now to Richard's workstation, shown in Figure 20, the invitation to join the Venue has reached his machine and has caused a bell 200 to appear at the bottom of his screen. The bell 200 is flashing and making a ringing sound to attract his attention. Richard clicks on the bell 200 and the result is shown in Figure 21. An invitation message box 202 is brought up telling Richard that he has been invited to a meeting and giving the name of the meeting and the name of the person who convened the meeting. The invitation message box 202 comprises two options: Accept and Decline. Richard clicks on the Accept option to accept the invitation to join the meeting.

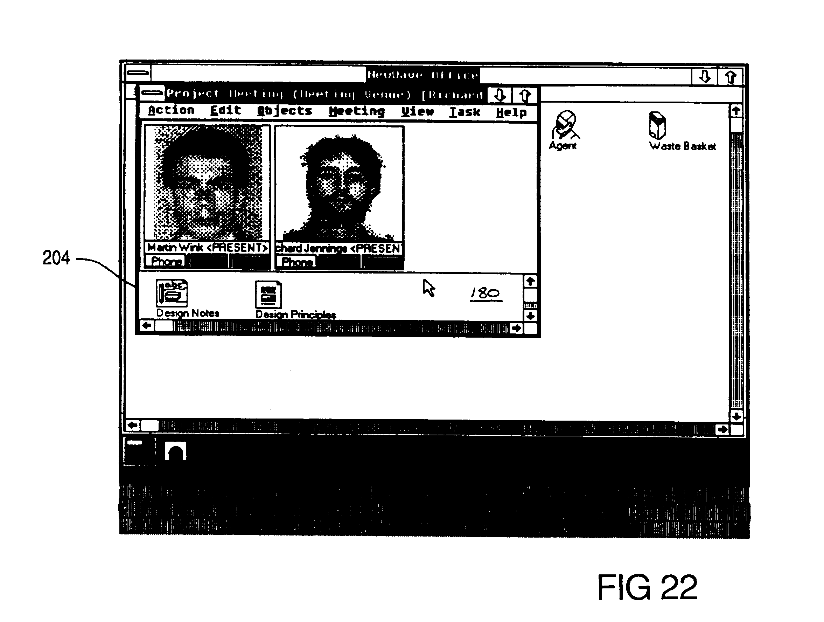

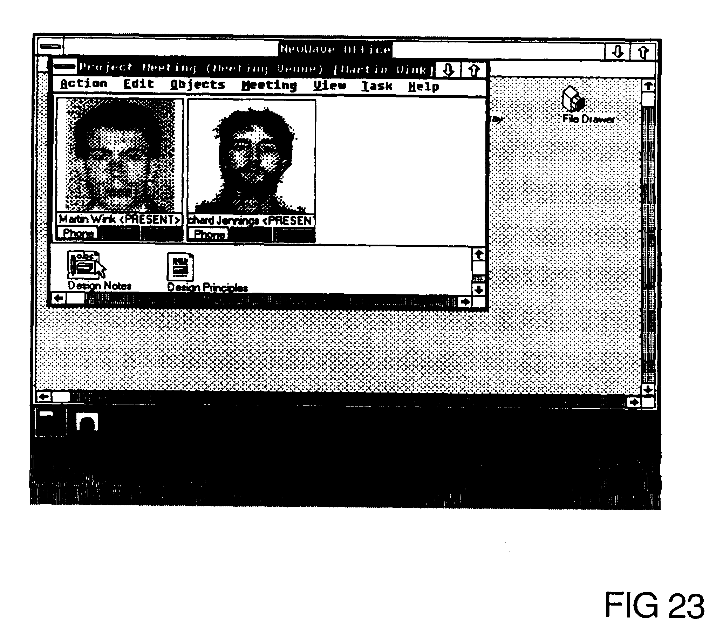

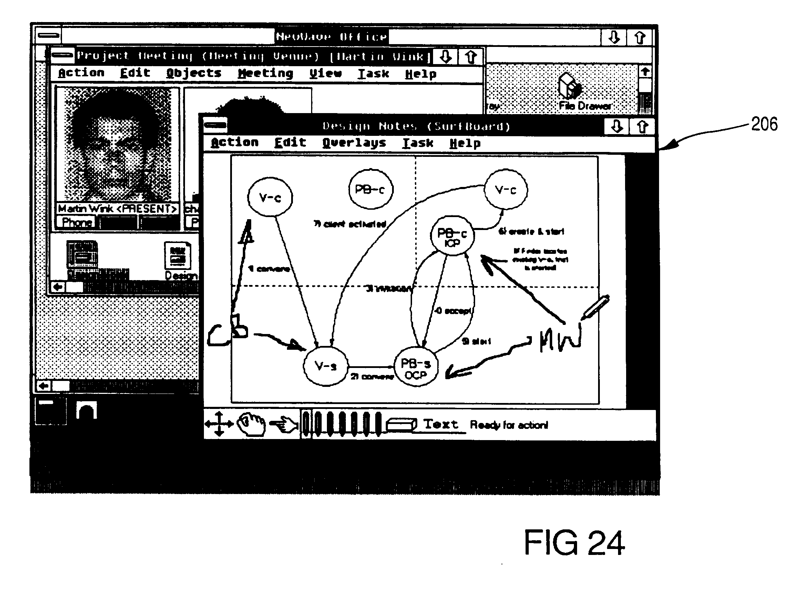

Referring to Figure 22 accepting the invitation causes a Venue client object automatically to be created and a window 204 to be opened for Richard. The chosen media connections have been set up so that Richard can now see and hear Martin and the objects that Martin has placed into the shared items area 180 are available to him. Figure 23 shows that Martin can see the same Venue having the same contents on his workstation. Referring to Figure 24, during the meeting, Martin has opened a window 206 on the Design Notes whiteboard object. Martin informs Richard of this so that Richard can also view the whiteboard object and then both Martin and Richard can scribble on the whiteboard and view each others input. When their meeting is finished both Martin and Richard close and save the Venue.

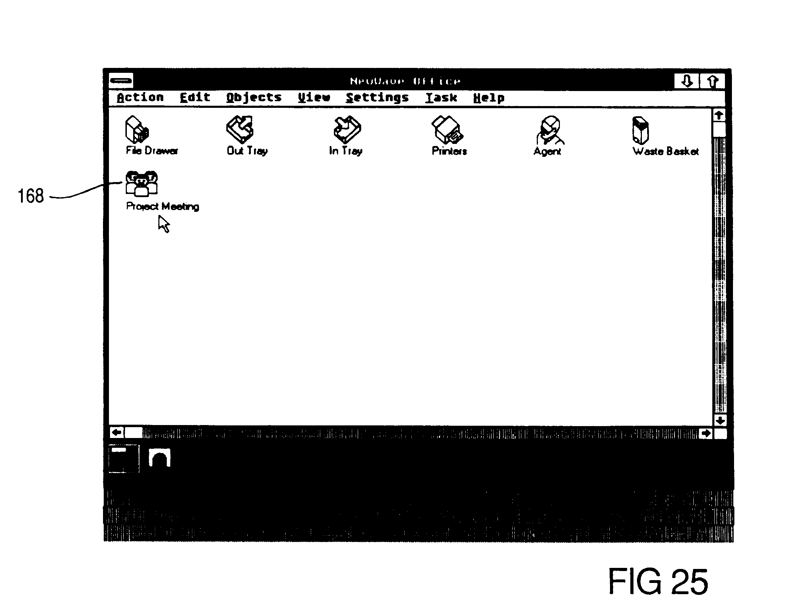

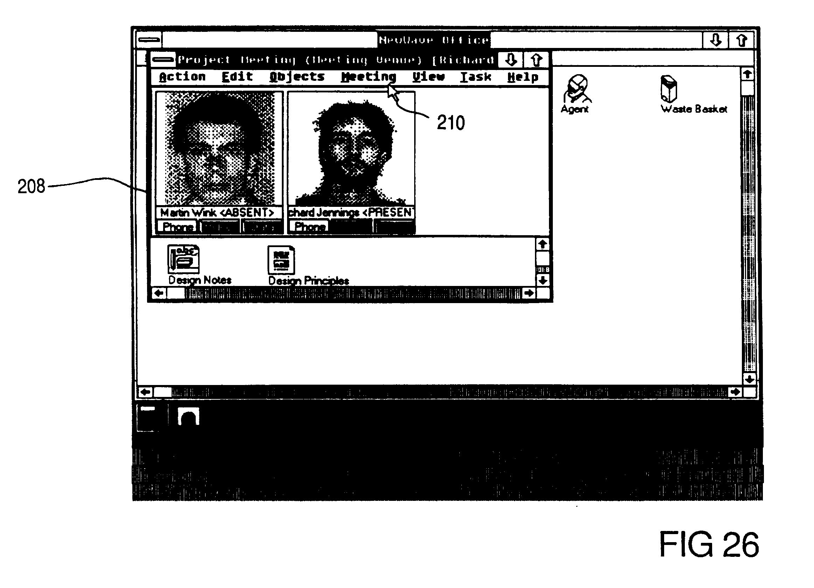

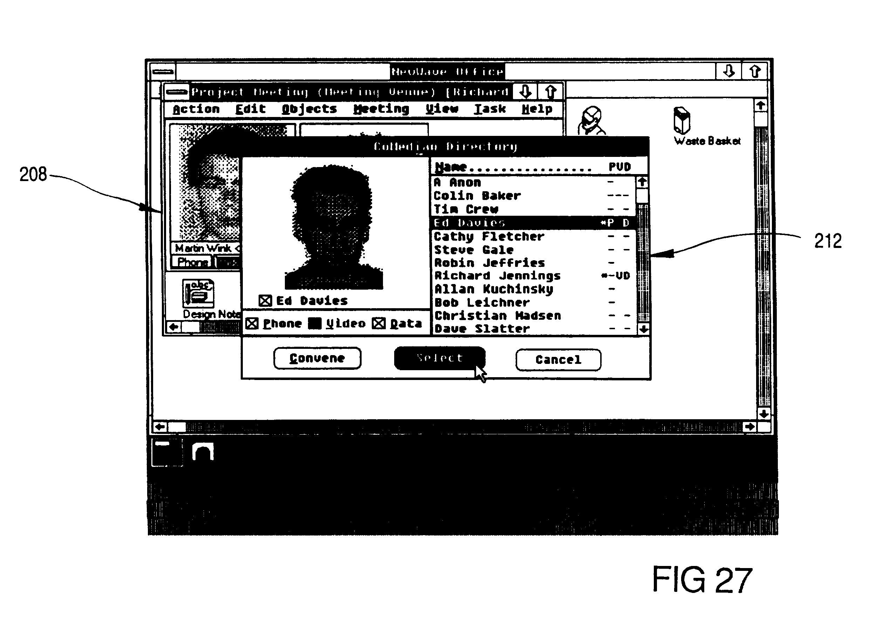

Figure 25 shows the Venue object 168 saved in Richard's NewWave office. In Figure 26, Richard has just opened his NewWave office and is viewing the Venue 168 in a window 208. Martin is not present (although he would be if, coincidently, he had his Venue open at the same time as Richard. In that situation, the relevant media connections would automatically be set up). Referring to Figure 27, Richard has selected the Meeting menu item using the cursor 210 so as to bring up the CoMedian directory 212 and he has selected Ed Davies in the manner previously described. Ed Davies does not have video capability, instead he is selected by telephone. Clicking on the Select button will cause Ed to be added to the Venue without beginning a Convene operation.

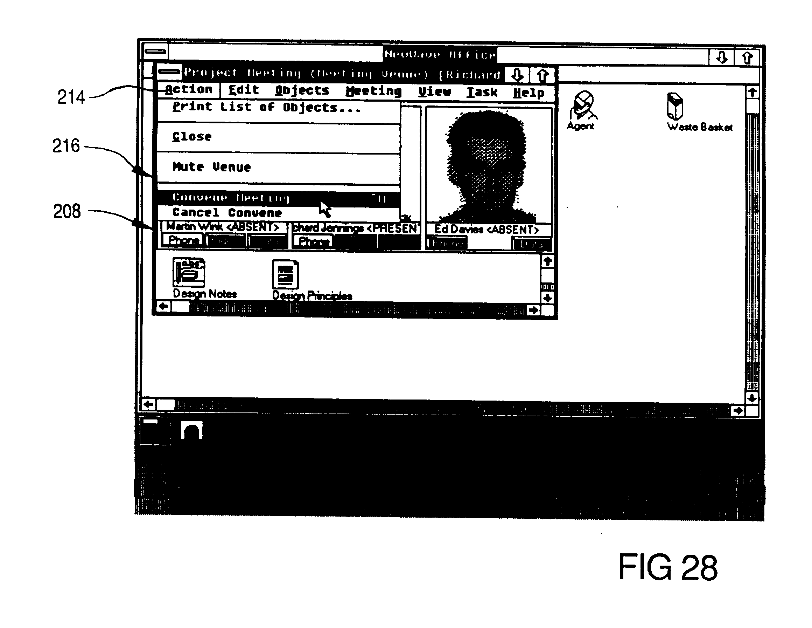

Referring to Figure 28, Richard is about to initiate a Convene operation by selecting the Action item from the menu bar 214 of the window 208, and selecting the Convene option from the corresponding menu 216. Since Ed does not have video capabilities, the audio from his telephone would be mixed into the video feed into Martin and Richard and their audio signals would be sent to Ed's telephone during their distributed meeting.

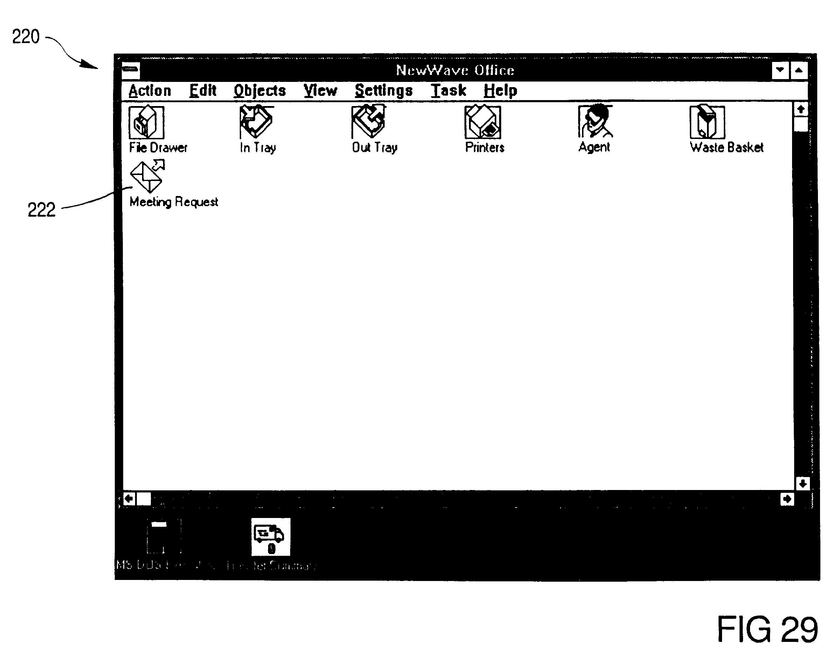

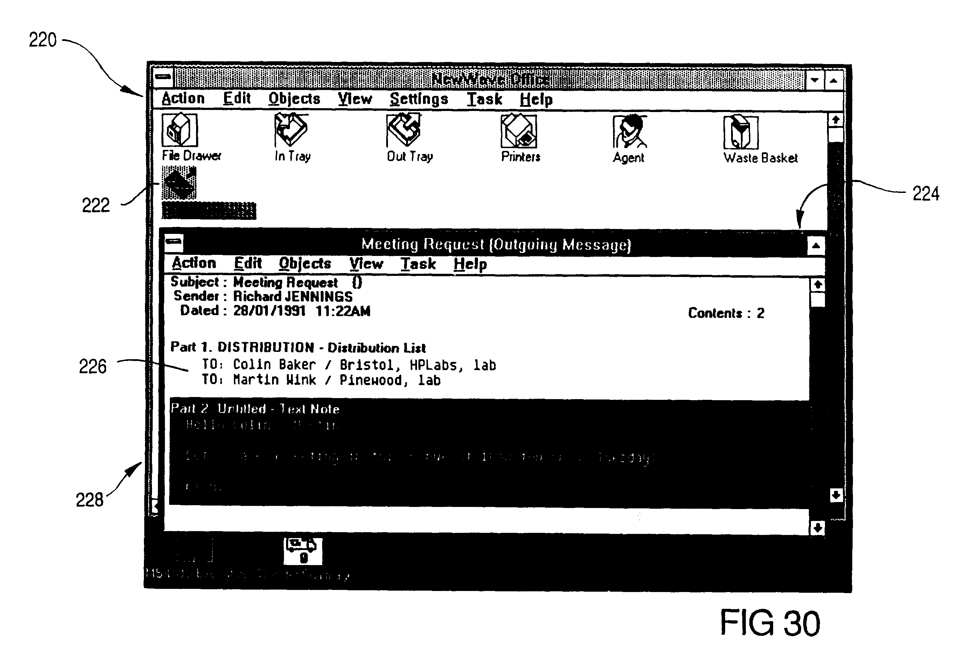

Turning now to Figure 29, a new session is beginning on Richard Jenning's workstation. A window 220 contains Richard's NewWave Office. Richard has created an outgoing message represented by the icon 222 called "Meeting Request" (using the "Create a New" option from the Action Menu - see Figures 14 to 17 of Appendix A). In Figure 30, on opening the outgoing message 222 it is displayed in a window 224. Richard has completed the distribution list 226 and written a cover note 228.

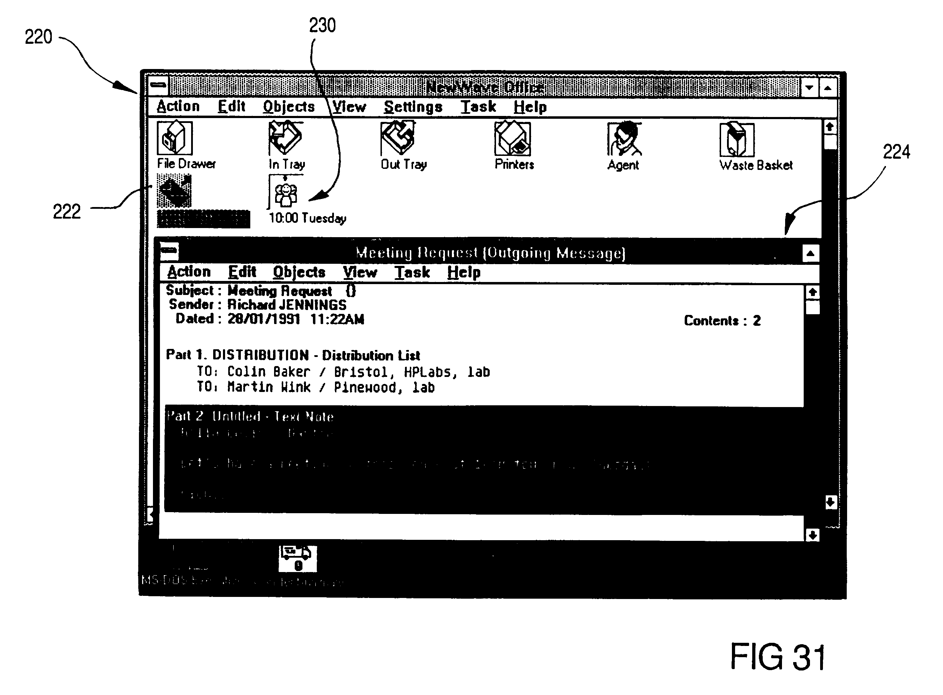

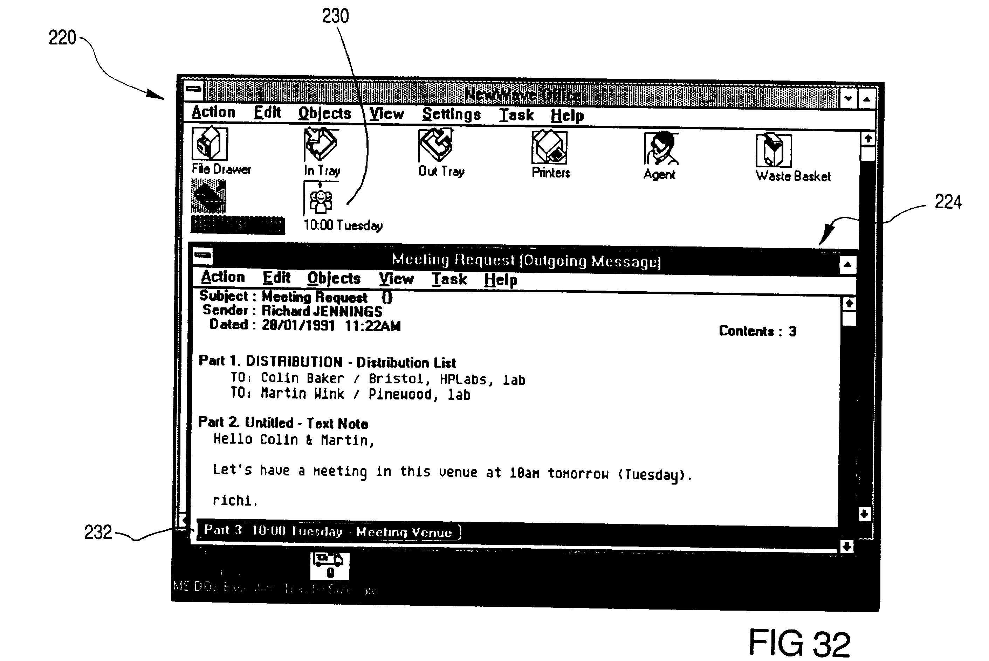

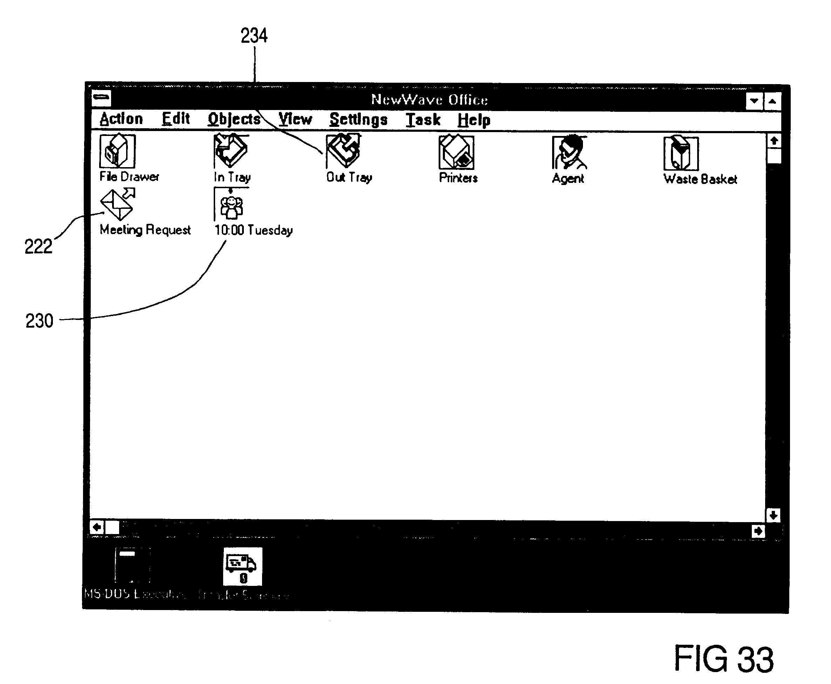

Referring to Figure 31, a new Venue-client object represented by the icon 230 is created (again using the "Create a New" option). The Venue-client object 230 is copied and dragged into the window 224 displaying the message. This is achieved by clicking on the icon 230 and pressing the control key whilst dragging the icon into the message. (This is an alternative method from the user perspective to the copy procedure described with reference to Figures 18-20 of Appendix A.) The bar 232 labelled "Part 3" in Figure 32 shows that the message now contains a copy of the Venue-client object. The message window 224 is then closed (Figure 33). To send the message 222 it can be dragged onto the Out Tray icon 234. This causes a copy of the message, including the Venue-client object which it contains, to be sent to the people on the distribution list. The Out Tray object 234 initiates the serialisation of the message components to enable these to be transmitted over the network. On receipt at the respective destinations, the In Tray object represented by icon 236 deserialises the message components so that these can be viewed and manipulated by the recipients. The recipients can drag the Venue-client object out of the message and into their main NewWave Office window (220). At the appointed time, the three participants open their Venue-client objects to begin a distributed meeting. During the meeting, the users can open shared objects e.g. a Whiteboard object, and modify these interactively as well as interacting through their telephone and video interconnections. For example, input made by each user to a Whiteboard-client object is relayed to the Whiteboard server-object which updates all of the other corresponding active Whiteboard-client objects of the changes.

Although only Venue shared objects and Whiteboard shared objects are available to a user in this embodiment, it is envisaged that further possibilities for shared objects are a fax object, a discourse structurer object and tools to control the external media such as a virtual monitor manager and a video cassette recorder controller.

It is envisaged that a system according to the present invention may not entail the use of dedicated server machines but that server objects could run on user workstations given a suitable inter-object messaging infrastructure.

## Claims

1. An object based distributed computer system comprising a network of workstations and means for transmitting objects between workstations, wherein said computer system supports objects of a first object type (V-s) adapted for storing data and objects of a second object type (V-c) adapted for presenting data stored in a corresponding object of the first object type (V-s) referenced by said object of the second object type (V-c), to a user, whereby a plurality of users of workstations each in possession of an object of the second object type (V-c) referencing a given object of the first object type (V-s) are able thereby to access data of the given object of the first object type (V-s), wherein the computer system further comprises means for transmitting an object of the second object type (V-c) between workstations, whereby a result of transmitting an object of the second object type (V-c) to a given workstation is to create at the given workstation a reference to the object of the first object type (V-s) associated with said transmitted object of the second object type (V-c) at the given workstation.

2. A system according to claim 1 comprising means for copying an object of the second object type (V-c) between workstations.

3. A system according to claim 1 or claim 2 wherein transmitted objects of the second object type (V-c) include an identifier (60) for the associated object of the first object type (V-s).

4. A system according to any preceding claim adapted to provide a medium for conferencing between a plurality of users each having access to a separate workstation of the computer system whereby said plurality of users can each access and change a shared body of data to allow a real time passage of information between said plurality of users, wherein said shared body of data is provided as an object of the first object type (V-s) and wherein each of the plurality of users has an object of the second object type (V-c) corresponding to said object of the first object type (V-s) to present said shared body of data to each of the plurality of users.

5. A method of convening a meeting using a system as claimed in claim 4, comprising storing meeting data in objects of the first type (V-s), presenting meeting data by means of objects of the second type (V-c), and transmitting one or more copies of an object of the second object type (V-c) to one or more receiving workstations thereby to create a reference at each workstation receiving one of said one or more copies of the object of the second object type (V-c) to the object of the first object type (V-s) associated with the object of the second object type whereby users at each said workstation are able thereby to access data of the object of the first object type (V-s).

## Patentansprüche

1. Ein objektbasiertes verteiltes Computersystem, das ein Netz von Workstations und eine Einrichtung zum Übertragen von Objekten zwischen Workstations aufweist, wobei das Computersystem Objekte eines ersten Objekttyps (V-s), der zum Speichern von Daten angepaßt ist, und Objekte eines zweiten Objekttyps (V-c) unterstützt, der zum Darstellen von Daten zu einem Benutzer angepaßt ist, die in einem entsprechenden Objekt des ersten Objekttyps (V-s) gespeichert sind, auf das durch das Objekt des zweiten Objekttyps (V-c) Bezug genommen wird, wodurch eine Mehrzahl von Benutzern von Workstations, die jeweils ein Objekt des zweiten Objekttyps (V-c) besitzen, das auf ein gegebenes Objekt des ersten Objekttyps (V-s) Bezug nimmt, dadurch auf Daten des gegebenen Objekts des ersten Objekttyps (V-s) zugreifen können, wobei das Computersystem ferner eine Einrichtung zum Übertragen eines Objekts des zweiten Objekttyps (V-c) zwischen Workstations aufweist, wodurch ein Resultat des Übertragens eines Objekts des zweiten Objekttyps (V-c) zu einer gegebenen Workstation darin besteht, in der gegebenen Workstation eine Bezugnahme zu dem Objekt des ersten Objekttyps (V-s) zu erzeugen, das dem übertragenen Objekt des zweiten Objekttyps (V-c) in der gegebenen Workstation zugeordnet ist.

2. Ein System gemäß Anspruch 1, das eine Einrichtung zum Kopieren eines Objekts des zweiten Objekttyps (V-c) zwischen Workstations aufweist.

3. Ein System gemäß Anspruch 1 oder 2, bei dem übertragene Objekte des zweiten Objekttyps (V-c) einen Identifizierer (60) für das zugeordnete Objekt des ersten Objekttyps (V-s) aufweisen.

4. Ein System gemäß einem beliebigen vorhergehenden Anspruch, das angepaßt ist, um ein Medium für eine Konferenz zwischen einer Mehrzahl von Benutzern vorzusehen, die jeweils einen Zugriff auf eine getrennte Workstation des Computersystems besitzen, wodurch die Mehrzahl von Benutzern jeweils auf einen gemeinsam verwendeten Datenkörper zugreifen können und denselben ändern können, um einen Echtzeitdurchgang von Informationen zwischen der Mehrzahl von Benutzern zu ermöglichen, wobei der gemeinsam verwendete Datenkörper als ein Objekt des ersten Objekttyps (V-s) vorgesehen ist, und wobei jeder der Mehrzahl von Benutzern ein Objekt des zweiten Objekttyps (V-c) besitzt, das dem Objekt des ersten Objekttyps (V-s) entspricht, um den gemeinsam verwendeten Datenkörper jedem der Mehrzahl von Benutzern darzustellen.

5. Ein Verfahren zum Einberufen eines Meetings unter Verwendung eines Systems gemäß Anspruch 4, mit folgenden Schritten: Speichern von Meetingdaten in Objekten des ersten Typs (V-s), Darstellen der Meetingdaten mittels Objekten des zweiten Typs (V-c), und Übertragen einer oder mehrerer Kopien eines Objekts des zweiten Objekttyps (V-c) zu einer oder mehreren empfangenden Workstations, um dadurch eine Bezugnahme bei jeder Workstation, die eine der einen oder mehreren Kopien des Objekts des zweiten Objekttyps (V-c) empfängt, zu dem Objekt des ersten Objekttyps (V-s), das dem Objekt des zweiten Objekttyps zugeordnet ist, zu erzeugen, wodurch Benutzer bei jeder Workstation auf Daten des Objekts des ersten Objekttyps (V-s) zugreifen können.

## Revendications

1. Système informatique réparti basé sur des objets comprenant un réseau de stations de travail et des moyens pour transmettre des objets entre stations de travail, dans lequel ledit système informatique supporte des objets d'un premier type d'objet (V-s) adapté pour mémoriser des données et des objets d'un deuxième type d'objet (V-c) adapté pour présenter des données mémorisées dans un objet correspondant du premier type d'objet (V-s) référencé par ledit objet du deuxième type d'objet (V-c) pour un utilisateur, permettant ainsi à une pluralité d'utilisateurs de stations de travail, chacun en possession d'un objet du deuxième type d'objet (V-c) référençant un objet donné du premier type d'objet (V-s), d'accéder ainsi à des données de l'objet donné du premier type d'objet (V-s), dans lequel le système informatique comprend en outre des moyens pour transmettre un objet du deuxième type d'objet (V-c) entre stations de travail, ce qui fait que la transmission d'un objet du deuxième type d'objet (V-c) à une station de travail donnée aboutit à créer sur la station de travail donnée une référence à l'objet du premier type d'objet (V-s) associé audit objet transmis du deuxième type d'objet (V-c) sur la station de travail donnée.

2. Système selon la revendication 1, comprenant des moyens pour copier un objet du deuxième type d'objet (V-c) entre stations de travail.

3. Système selon la revendication 1 ou la revendication 2, dans lequel les objets transmis du deuxième type d'objet (V-c) incluent un identificateur (60) pour l'objet associé du premier type d'objet (V-s).

4. Système selon l'une quelconque des revendications précédentes, adapté pour prévoir un support pour la conférence entre une pluralité d'utilisateurs, chacun ayant accès à une station de travail séparée du système informatique, permettant ainsi à ladite pluralité d'utilisateurs individuellement d'accéder à, et de modifier un ensemble partagé de données pour permettre un passage en temps réel des informations entre ladite pluralité d'utilisateurs, dans lequel ledit ensemble partagé de données est prévu comme un objet du premier type d'objet (V-s), et dans lequel chacun de la pluralité d'utilisateurs a un objet du deuxième type d'objet (V-c) correspondant audit objet du premier type d'objet (V-s) pour présenter ledit ensemble partagé de données à chacun de la pluralité d'utilisateurs.

5. Procédé pour convoquer une réunion utilisant un système selon la revendication 4, comprenant la mémorisation des données de réunion dans des objets du premier type (V-s), la présentation des données de réunion au moyen d'objets du deuxième type (V-c), et la transmission d'une ou de plusieurs copies d'un objet du deuxième type d'objet (V-c) à une ou plusieurs stations de travail de réception, afin de créer ainsi une référence à chaque station de travail recevant l'une desdites une ou plusieurs copies de l'objet du deuxième type d'objet (V-c) à l'objet du premier type d'objet (V-s) associé à l'objet du deuxième type d'objet, permettant ainsi aux utilisateurs sur chacune desdites stations de travail d'accéder ainsi aux données de l'objet du premier type d'objet (V-s).
